# NEUE EUROPÄISCHE PATENTSCHRIFT

(11) **EP 3 606 818 B2**
(45) Veröffentlichungstag und Bekanntmachung des Hinweises auf die Entscheidung über den Einspruch: **11.02.2026**
(45) Hinweis auf die Patenterteilung: 15.09.2021
(21) Anmeldenummer: 18714508.1
(22) Anmeldetag: 29.03.2018
(51) Int. Cl.: B64D 11/04

(54) **FLUGZEUG MIT EINEM MONUMENT FÜR DIE FLUGZEUGKABINE**
AIRCRAFT COMPRISING A MONUMENT FOR THE AIRCRAFT CABIN
AVION COMPRENANT UNE UNITE MODULAIRE POUR LA CABINE D'AVION

(30) Priorität: 03.04.2017 DE 102017205637
(43) Veröffentlichungstag der Anmeldung: 12.02.2020
(73) Patentinhaber: Lufthansa Technik AG, 22335 Hamburg (DE)
(72) Erfinder: KURZ, Christian, 22307 Hamburg (DE); WIENHOLTZ, Thorben, 20357 Hamburg (DE)
(74) Vertreter: Müller Verweyen
(86) Internationale Anmeldenummer: PCT/EP2018/058136
(87) Internationale Veröffentlichungsnummer: WO 2018/184995

(56) Entgegenhaltungen:
- WO-A1-2015/155379
- US-A- 5 808 661
- US-A- 6 087 927
- US-A1- 2003 057 323
- US-A1- 2003 200 546
- US-A1- 2006 238 375
- US-A1- 2008 136 299
- US-A1- 2010 218 225
- US-A1- 2012 025 018
- US-A1- 2013 160 061
- US-A1- 2013 187 000
- US-A1- 2013 248 652

## Beschreibung

### Beschreibung

Die vorliegende Erfindung betrifft ein Flugzeug mit einem Monument.

Monumente für Flugzeugkabinen im Sinne der Erfindung sind große vorgefertigte Baugruppen, welche speziell an den in der Flugzeugkabine zur Verfügung stehenden Bauraum angepasst sind. Als wesentliche Bestandteile können Monumente Flugzeugküchenbaugruppen und Sanitärbaugruppen wie Toilettenbaugruppen umfassen.

Die Flugzeugküchenbaugruppe weist die in einer Küche zur Aufbewahrung und Zubereitung von Speisen und Getränken erforderlichen Untereinheiten auf und wird als vormontierte Baugruppe in der Flugzeugkabine montiert. Die Untereinheiten in der Flugzeugküchenbaugruppe können z.B. integrierte, thermisch isolierte Kühl- oder Warmhalteeinrichtungen, Kaffeemaschinen, Spül- und Reinigungseinrichtungen oder dergleichen sein. Ferner können derartige Flugzeugküchenbaugruppen weiter eine oder mehrere der folgenden zusätzlichen Baugruppen umfassen: Kommunikationsbaugruppen, Steuerungsbaugruppen und dergleichen. Die Flugzeugküchenbaugruppen werden auch als "Galley" bezeichnet und weisen einen Aufbau mit standardisierten Einschubfächern auf, in welchen verschiedene Module unterschiedlicher Funktion aufnehmbar sind. Dadurch kann die Flugzeugküchenbaugruppe, ohne in ihrem Grundaufbau verändert zu werden, für das Flugzeug individuell angepasst werden.

In Flugzeugen mit einer Flugzeugkabine mit nur einem Gang und zwei seitlich davon angeordneten Sitzgruppen (sogenannte "single aisle"-Flugzeuge) ist das Monument in der Regel in einem hinteren Abschnitt der Flugzeugkabine angeordnet, so dass die Flugbegleiter die Flugzeugkabine ausgehend von dem Monument in Flugrichtung vollständig übersehen können. Als Flugbegleiter im Sinne der Anmeldung werden selbstverständlich sowohl weibliche als auch männliche Flugbegleiter in der Flugzeugkabine verstanden.

Grundsätzlich müssen sowohl die Passagiere als auch die Flugbegleiter während der Start- und Landephasen auf ihren Sitzen in einer aufrechten Position sitzen und durch geeignete Rückhalteeinrichtungen, wie z.B. Sicherheitsgurteinrichtungen, gesichert sein. Gemäß einer weiteren Anforderung der Luftfahrtvorschrift (EASA CS 25.0785) muss ferner sichergestellt sein, dass wenigstens ein Flugbegleiter die Passagiere während der Start- und Landephase im Blick haben muss. Zur Erfüllung dieser Anforderung wird ein Sitz (Cabin Attendant Seat - CAS) für einen Flugbegleiter vorgesehen, welcher so angeordnet ist, dass der darauf sitzende Flugbegleiter während der Start- und Landephasen freie Sicht auf die Passagiere hat. Bei der Anordnung eines Monumentes mit den oben beschriebenen Baugruppen in einem hinteren Bereich der Flugzeugkabine eines Flugzeuges des "single aisle"-Typs wird dieser Sitz bevorzugt mittig und fluchtend zu dem Gang der Flugzeugkabine an dem Monument angeordnet, und dabei so ausgerichtet, dass der darauf sitzende Flugbegleiter in Flugrichtung nach vorne durch den Gang blickt und dadurch die seitlich des Ganges sitzenden Passagiere im Blickfeld hat.

Nachteilig bei dieser Lösung ist es, dass der vorzusehende Sitz für den Flugbegleiter aufgrund seiner vorzusehenden Anordnung die Gestaltungsfreiheit für die Flugzeugkabine einschränkt, so dass der zur Verfügung stehende Innenraum in der Flugzeugkabine nicht optimal zur Anordnung von Flugzeugsitzen für Passagiere ausgenutzt werden kann. Im Extremfall kann dies dazu führen, dass die maximale Anzahl von Flugzeugsitzen in der Flugzeugkabine dadurch reduziert wird, obwohl die Innenraumverhältnisse der Flugzeugkabine eigentlich eine Anordnung von einer größeren Anzahl von Flugzeugsitzen zulassen würde. Ferner wird das Gewicht des Monuments durch den daran vorzusehenden Flugzeugsitz erhöht. Sämtliche Sitze in Flugzeugen müssen so befestigt sein, dass sie zusammen mit einer darauf sitzenden Person auch bei Beschleunigungen bis zu 16 g sicher befestigt sind, so dass die Befestigung des Flugzeugsitzes an dem Monument außerdem entsprechend fest und das Monument im Bereich der Befestigung entsprechend formstabil ausgebildet sein muss. Auch dies führt zu einer nachteiligen Gewichtserhöhung des Monuments.

Aus der WO 2015/155379 A1 ist es bereits bekannt, die Flugzeugkabine mittels einer Kamera zu überwachen und das von der Kamera aufgenommene Bild durch eine Wiedergabeeinrichtung wie z.B. einen Monitor wiederzugeben, so dass der Flugbegleiter die Passagiere auch von einer anderen Stelle der Flugzeugkabine durch Blick auf den Monitor im Blickfeld haben kann. Die Überwachung der Passagiere erfolgt dann über den Monitor und nicht durch einen direkten Sichtkontakt.

Die US 5,808,661 A offenbart ein Kommunikationssystem für ein Flugzeug, das es einem Passagier erlaubt, mit einem Flugbegleiter zu kommunizieren.

Aus der US 2003/0200546 A1 ist ein Unterhaltungssystem für ein Flugzeug bekannt, bei dem die Inhalte auf einem Bildschirm des Flugzeugsitzes dargestellt werden.
Die US 2006/0238375 A1 offenbart ein Überwachungssystem für einen Bereich vor dem Cockpit eines Flugzeugs.
Vor diesem Hintergrund liegt der Erfindung die Aufgabe zugrunde, eine Lösung bereitzustellen, durch welche die Gestaltungsfreiheit bei der Auslegung der Flugzeugkabine mit möglichst geringen Mehrkosten und Montageaufwand weiter verbessert werden kann.
Erfindungsgemäß wird zur Lösung der Aufgabe ein Flugzeug mit einem Monument mit den Merkmalen von Anspruch 1 vorgeschlagen.

Gemäß einem Grundgedanken der Erfindung wird zur Lösung der Aufgabe ein Flugzeug mit einem Monument vorgeschlagen, an dem ein Monitor zur Wiedergabe der von einer Kameraüberwachungseinrichtung aufgenommenen Bilder vorgesehen ist.

Die vorgeschlagene Lösung weist mehrere Vorteile auf. Der wichtigste Vorteil ist darin zu sehen, dass der zur Beobachtung der Passagiere vorgesehene Monitor an dem Monument eine Beobachtung der Passagiere in der Flugzeugkabine an dem Monument ermöglicht, ohne dass sich die Passagiere direkt im Blickfeld des Flugbegleiters befinden. Der Monitor kann dabei insbesondere unabhängig von der Anordnung des Monumentes und dem Blickfeld so an dem Monument angeordnet sein, dass die Flugbegleiter die Passagiere während der Start- und Landephasen auf dem Monitor bequem beobachten können. Ferner wird der Monitor zusammen mit dem Monument vormontiert und als Baugruppe im Flugzeug montiert. Dadurch kann der Monitor ohne Mehraufwand bei der Montage des Flugzeuges in dem Flugzeug vorgesehen werden. Die Wahl des Monumentes zur Anordnung des Monitors ist ferner deshalb von Vorteil, da das Monument der Ort ist, welchen die Flugbegleiter regelmäßig und sehr oft aufsuchen, so dass die Wahrscheinlichkeit, dass mindestens ein Flugbegleiter den Monitor betrachten kann, hier am größten ist. Außerdem kann der Flugbegleiter die Passagiere auch dann beobachten, wenn er mit anderen Tätigkeiten z.B. der Vorbereitung von Servicehandlungen beschäftigt ist. Ferner sind in dem Bereich bzw. in der Nähe des Monumentes, insbesondere bei "single aisle"-Flugzeugen, die Ausstiege und insbesondere die Notausstiege vorgesehen, welche bewusst verbreitert sind und damit bevorzugt zur Anordnung der Sitze für die Flugbegleiter dienen können, von denen die Flugbegleiter dann den an dem Monument vorgesehenen Monitor besonders einfach beobachten können.

Weiter wird vorgeschlagen, dass der Monitor in einer Gebrauchsstellung quer zu der Flugrichtung angeordnet ist, so dass der Flugbegleiter den Monitor bei einer geraden Haltung und einer in Flugrichtung oder entgegen der Flugrichtung ausgerichteten Sitzrichtung ergonomisch ohne eine Kopfdrehung betrachten kann.

Erfindungsgemäß ist an dem Monument ein dem Monitor gegenüber angeordneter Flugzeugsitz vorgesehen, so dass der Monitor und der Flugzeugsitz aufgrund der Anordnung an derselben Baugruppe in einer festen räumlichen Zuordnung zueinander stehen. Ferner kann dadurch die Montagezeit im Flugzeug verringert werden.

Ferner kann der Monitor bevorzugt schwenkbar an dem Monument gehalten sein, so dass der Betrachter den Monitor zur besseren Sichtbarkeit der Anzeige ausrichten kann, was insbesondere bei schräg einfallendem Sonnenlicht und damit verbundenen Spiegelungen von Vorteil ist.

Außerdem kann an dem Monument ein Staufach zur Aufnahme des Monitors vorgesehen sein, so dass der Monitor bei einer Nichtbenutzung in einer Nichtgebrauchsstellung in dem Staufach entsprechend verstaut werden kann. Dadurch kann der Monitor in der Nichtgebrauchsstellung vor äußeren mechanischen Einwirkungen geschützt werden, und er ist bei einer Nichtbenutzung nicht störend im Weg. Als Staufach kann ein verschließbares oder offenes Fach dienen, in welches der Monitor eingesteckt oder eingeschwenkt werden kann. Alternativ kann das Staufach aber auch eine Vertiefung in Form einer Hutze sein, welche so tief bemessen ist, dass der Monitor bei einer Anordnung in der Vertiefung nicht über die Außenfläche der Flugzeugküchenbaugruppe hinaussteht. In diesem Fall kann der Monitor auch fest an dem Monument angeordnet sein, und die Vertiefung bzw. Hutze kann auch während des Gebrauchs des Monitors zusätzlich als Sonnenschutz für den Monitor dienen, wodurch die Ablesbarkeit des Monitors verbessert werden kann.

Weiter kann der Monitor bevorzugt eine oder mehrere optische Ein- und Ausgabeeinheiten und/oder eine oder mehrere akustische Ein- und Ausgabeeinheiten und/oder eine oder mehrere haptische Eingabeeinheiten aufweisen. Der Monitor kann dadurch nicht nur zur Überwachung und Visualisierung der Bilder der Kameraüberwachungseinrichtung, sondern zusätzlich auch zur Eingabe von Daten und zur Kommunikation der Flugbegleiter mit den Passagieren verwendet werden, wobei sowohl optische Signale als auch akustische Signale ein- und ausgegeben werden können. Ferner kann auch eine haptische Eingabe über berührungsempfindliche Schaltflächen auf dem Monitor vorgesehen sein.

Weiter kann der Monitor auch zur Wiedergabe des Abbildes des Betrachters eingerichtet sein. Dies kann dadurch verwirklicht sein, indem an dem Monitor eine Kamera vorgesehen ist, welche auf den Betrachter des Monitors gerichtet ist, und deren aufgenommenes Bild auf dem Monitor zur Anzeige gebracht werden kann. Alternativ kann die Spiegelfunktion des Monitors auch dadurch verwirklicht werden, indem der Monitor von einem Spiegel abgedeckt wird, oder indem der Monitor selbst in einen reflektierenden Modus umgeschaltet wird. Die Flugbegleiter können den Monitor dadurch für sich selbst als eine optische Kontrolle und zur Korrektur ihres äußeren Erscheinungsbildes nutzen, bevor sie ihre Serviceaufgaben in der Flugzeugkabine wahrnehmen.

Weiter wird vorgeschlagen, dass die Kameraüberwachungseinrichtung und der Monitor zusammen ein von weiteren Einrichtungen unabhängiges autarkes System bilden. Dies hat den Vorteil, dass bereits in Betrieb genommene Flugzeuge nachgerüstet werden können. Bereits verwendete Kabinenmanagementsysteme ermöglichen es bereits heute, verschiedene Funktionen über einen Monitor abzurufen, jedoch basieren diese Systeme nicht auf modernen Serverlösungen, sondern auf Technologien zum Zeitpunkt der erstmaligen Zulassung des Flugzeugmusters. Darüber hinaus müssen diese Systeme weitaus höhere Luftfahrtanforderungen erfüllen. Damit sind diese Systeme nur bedingt erweiterbar, so dass die vorgeschlagene Lösung einer autarken Ausbildung der Kameraüberwachungseinrichtung und des damit zusammenwirkenden Monitors als besonders günstige Nachrüstlösung auch in Flugzeugen älterer Bauart verwendet werden kann.

Weiter wird vorgeschlagen, dass der Monitor eine Auflösung von wenigstens 1280 x 720 Pixeln, vorzugsweise von 1920 x 1080 Pixeln aufweist. Der Monitor kann dadurch zu einer sehr guten Beobachtung der Passagiere genutzt werden, wobei durch die vorgeschlagene Auflösung auch kleinere Bewegungen der Passagiere und Kleinigkeiten in der Flugzeugkabine sehr gut beobachtet werden können. So müssen die Flugbegleiter in sogenannten Flugzeugen des "single aisle"-Typs bis zu 200 Passagiere in der Flugzeugkabine beobachten können, was durch die hohe Auflösung ermöglicht wird.

Weiter wird vorgeschlagen, dass der Monitor eine Bildschirmdiagonale von wenigstens 13 Zoll aufweist, so dass das von dem Monitor wiedergegebene Bild eine Beobachtung der Passagiere ermöglicht, wenn die Flugbegleiter in einer Entfernung von 0,8 bis 1,5 Metern Entfernung von dem Monitor sitzen.

Erfindungsgemäß weist das Monument eine Flugzeugküchenbaugruppe auf, und der Monitor ist an der Flugzeugküchenbaugruppe angeordnet. Die Flugzeugküchenbaugruppe ist die Baugruppe, an der die Flugbegleiter die servicevorbereitenden Handlungen vorwiegend durchführen, so dass sie den Monitor auch während dieser Handlungen besonders gut beobachten können.

Erfindungsgemäß weist alternativ oder zusätzlich das Monument wenigstens eine Sanitärbaugruppe auf, und der Monitor ist an der Sanitärbaugruppe angeordnet. Sofern an der Sanitärbaugruppe ein zusätzlicher Monitor vorgesehen ist, kann die Beobachtung zusätzlich auch über diesen zusätzlichen Monitor erfolgen. Sofern die Kameraüberwachungseinrichtung zwei Kameras aufweist, welche jeweils auf eine Gruppe der Flugzeugsitze der Flugzeugkabine gerichtet sind, können auf den Monitoren dann unterschiedliche Gruppen von Flugzeugsitzen bzw. eine geringere Anzahl von Flugzeugsitzen, dafür aber in einer größeren Größe beobachtet werden.

Ferner kann das Flugzeug ein Bestellsystem aufweisen, welches eine flugzeugsitzindividualisierte Bestellaufgabe vorsieht, wobei der Monitor zur Wiedergabe der flugzeugsitzindividualisierten Bestellaufgabe eingerichtet ist. Das Bestellsystem kann dabei an jedem Flugzeugsitz jeweils eine Eingabeeinrichtung oder auch an jeder Reihe von Flugzeugsitzen jeweils eine Eingabeeinrichtung aufweisen, über welche der Passagier die Bestellung in das Bestellsystem eingeben kann. Der Passagier kann dann in dem Bestellsystem eine dem Flugzeugsitz zugeordnete Bestellung aufgeben, welche dann an dem an der Flugzeugküchenbaugruppe vorgesehenen Monitor zur Anzeige gebracht wird. Damit kann der Serviceaufwand für die Flugbegleiter erheblich verringert werden. Dies ist insbesondere deshalb von Vorteil, da die Bestellaufgabe dadurch auch schon während der Steilflugphasen erfolgen kann, während denen sich die Flugbegleiter auf ihren Sitzen befinden müssen. Damit entfällt die bisher erforderliche Bestellaufnahme, und die Flugbegleiter können dann nach dem Ende der Steilflugphase unmittelbar mit der Abarbeitung der Bestellungen beginnen, so dass die Flugbegleiter insgesamt mehr Zeit für die Abarbeitung der Bestellungen haben, was insbesondere bei Kurzstreckenflügen von Vorteil ist.

Weiter wird vorgeschlagen, dass das Flugzeug eine flugzeugsitzindividualisierte Kommunikationseinrichtung aufweist, und der Monitor zur Wiedergabe der von der Kommunikationseinrichtung übermittelten Signale eingerichtet ist. Die Flugbegleiter und die Passagiere können dadurch über die Kommunikationseinrichtung und den Monitor in der Flugzeugküchenbaugruppe miteinander kommunizieren, so dass die Flugbegleiter bei der Zubereitung der Speisen oder Getränke aufkommende Fragen unmittelbar mit dem Passagier klären können, ohne dass der Flugbegleiter den Passagier dafür ein weiteres Mal extra aufsuchen muss. Ferner können die Flugbegleiter die Passagiere auf diese Art auch beobachten, was insbesondere bei kranken Personen oder bei Kleinkindern von Vorteil sein kann.

Weiter wird beansprucht, dass in dem Flugzeug ein in der montierten Position dem Monitor gegenüber angeordneter Flugzeugsitz vorgesehen ist. Der Flugzeugsitz ist gegenüber dem Monitor angeordnet, die Position des Flugzeugsitzes wird praktisch durch die Anordnung des Monitors oder umgekehrt vorgegeben. Der Monitor befindet sich dadurch im Blickfeld des auf dem Flugzeugsitz sitzenden Flugbegleiters. Da die Flugzeugküchenbaugruppe, wie bereits oben beschrieben wurde bevorzugt an dem Ausstieg bzw. Notausstieg mit einem freizuhaltenden Ausgang angeordnet ist, kann der Flugzeugsitz zur Beobachtung des Monitors bevorzugt im Bereich des verbreiterten Ausganges vorgesehen werden, wobei der Flugzeugsitz eine Klappfunktion aufweisen kann, so dass er bei einer Nichtbenutzung zur Freigabe des Ausganges hochgeklappt werden kann.

Die Erfindung wird im Folgenden anhand bevorzugter Ausführungsformen unter Bezugnahme auf die beigefügten Figuren erläutert. Dabei zeigt:
- Fig. 1: eine Flugzeugkabine mit einer Flugzeugküchenbaugruppe in Schnittdarstellung von oben; und
- Fig. 2: die Flugzeugküchenbaugruppe in Sicht von vorne.

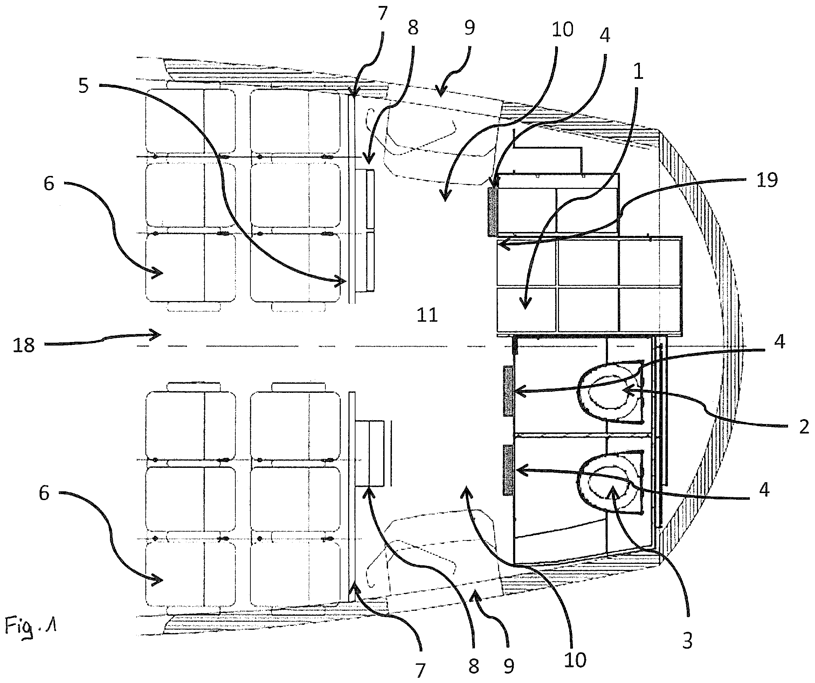

In der Figur 1 ist ein Ausschnitt eines rückwärtigen Endes einer Flugzeugkabine 11 zu erkennen. Das Flugzeug ist ein als "single aisle" bezeichneter Flugzeugtyp mit einem Zentralgang 18 und zwei seitlich davon angeordneten Gruppen von ersten Flugzeugsitzen 6. Im hinteren Abschnitt der Flugzeugkabine 11 ist ein Monument mit einer Flugzeugküchenbaugruppe 1 und zwei Sanitärbaugruppen 2 und 3 vorgesehen, welches vormontiert als Einheit in der Flugzeugkabine 11 montiert wird.

Die beiden Gruppen von ersten Flugzeugsitzen 6 werden an dem zu dem Monument zugewandten Ende durch zwei Trennwände 7 begrenzt, so dass die auf den ersten Flugzeugsitzen 6 sitzenden Passagiere abgesehen von dem Zentralgang 18 optisch und akustisch von dem Monument getrennt sind. Zwischen den Trennwänden 7 und dem Monument sind zwei seitlich von dem Zentralgang 18 abzweigende Ausgänge 10 mit jeweils einer Ausgangstür 9 vorgesehen, welche als regulärer Ausstieg oder auch als Notausstieg ausgebildet sein können.

An den Trennwänden 7 sind zwei zweite Flugzeugsitze 8 vorgesehen, auf denen jeweils ein Flugbegleiter während der Start- und Landephase des Flugzeuges sitzen kann. Bei den zweiten Flugzeugsitzen 8 handelt es sich um die eingangs beschriebenen Cabin Attendant Seats (CAS). Die zweiten Flugzeugsitze 8 sind klappbar und können damit in eine die Ausgänge 10 freigebende Stellung hochgeklappt werden. An einer der Trennwände 7 ist ferner eine in Richtung der ersten Flugzeugsitze 6 gerichtete Kamera einer Kameraüberwachungseinrichtung 5 vorgesehen. Damit die Kamera möglichst alle Passagiere der Flugzeugkabine 11 erfasst, ist sie in einem oberen Abschnitt einer der Trennwände 7 nahe dem Zentralgang 18 angeordnet und in einem möglichst flachen Winkel in Flugrichtung nach vorne in die Flugzeugkabine 11 ausgerichtet. Alternativ kann die Kamera der Kameraüberwachungseinrichtung 5 auch in einem vorderen Abschnitt der Flugzeugkabine 11 angeordnet und von vorne auf die ersten Flugzeugsitze 6 gerichtet sein. Ferner kann die Kameraüberwachungseinrichtung 5 auch mehrere auf unterschiedliche Gruppen der ersten Flugzeugsitze 6 gerichtete Kameras umfassen.

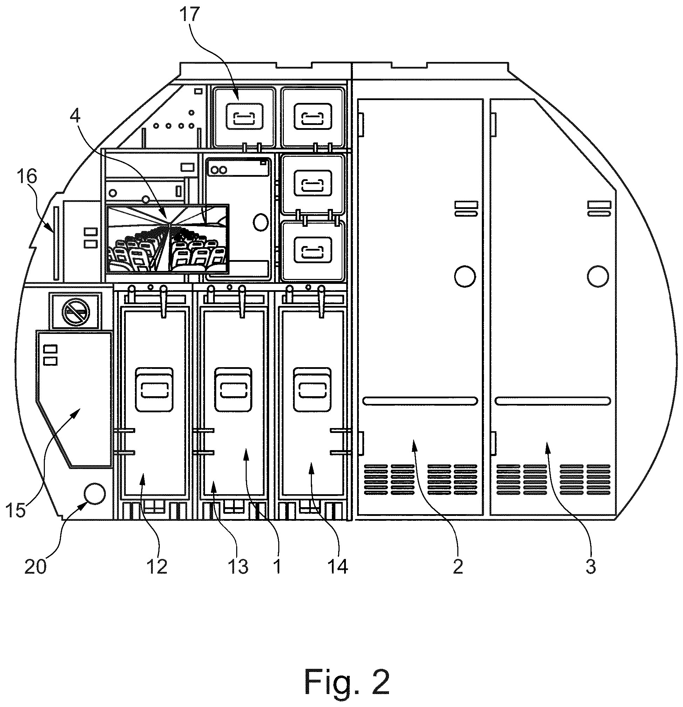

An der Flugzeugküchenbaugruppe 1 ist an einer vorderen Wandung 19 ein quer zu der Flugrichtung ausgerichteter Monitor 4 vorgesehen, welcher in einem oberen Abschnitt der Flugzeugküchenbaugruppe 1, in Blickhöhe des gegenüber auf dem zweiten Flugzeugsitz 8 sitzenden Flugbegleiters angeordnet ist, wie auch in der Figur 2 zu erkennen ist.

Die Flugzeugküchenbaugruppe 1 umfasst eine Mehrzahl von standardisierten Einschubfächern unterschiedlicher Größe und Formgebung. In dem unteren Abschnitt der Flugzeugküchenbaugruppe 1 sind an der rechten Seite ein doppeltbreites Einschubfach mit zwei darin angeordneten Trolleys 13 und 14 vorgesehen, an dessen linke Seite ein einfachbreites Einschubfach mit nur einem Trolley 12 angrenzt. Das doppeltbreite Einschubfach weist eine Tiefe auf, welche der Tiefe von drei sogenannten Half Size Trolleys entspricht, so dass drei Half Size Trolleys oder ein Full Size Trolley und ein Half Size Trolley darin eingeschoben werden können. Das einfachbreite Einschubfach weist dagegen nur die Tiefe von zwei Half Size Trolleys bzw. die Tiefe eines Full Size Trolleys auf, so dass entsprechend zwei Half Size Trolleys oder ein Full Size Trolley darin eingeschoben werden können. Die Trolleys 12, 13 und 14 dienen der Aufbewahrung von Speisen und Getränken und werden durch flughafenansässige Cateringfirmen vorgepackt. An dem linken unteren Abschnitt der Flugzeugküchenbaugruppe 1 ist weiter ein Fach mit einem Abfallbehälter 15 vorgesehen, unterhalb dessen außerdem ein Abschaltventil 20 vorgesehen ist, mit dem das gesamte Monument von einer zentralen Druckluftversorgung des Flugzeuges getrennt werden kann.

In dem oberen Abschnitt der Flugzeugküchenbaugruppe 1 ist eine Mehrzahl von kleineren Einschubfächern mit entsprechenden Einschüben 17 vorgesehen, in denen z.B. eine Kaffeemaschine, Geschirr, Bestecke, Eiswürfel oder auch einfach Nachschubpackungen für die in den Trolleys 12, 13 und 14 aufbewahrten Speisen und Getränke aufgenommen sein können. Die Unterteilung der oberen Einschubfächer ist gegenüber einer horizontalen mittigen Trennwand der Flugzeugküchenbaugruppe 1 etwas zurückversetzt, so dass die mittige Trennwand an ihrer Oberseite eine Arbeitsfläche bildet. Ferner ist seitlich der Einschubfächer ein schlitzförmiges, vertikal ausgerichtetes Staufach 16 vorgesehen, in welches der Monitor 4 in einer Nichtgebrauchsstellung einschiebbar ist. In der Gebrauchsstellung, welche in der Figur 2 zu erkennen ist, ist der Monitor 4 senkrecht zu der Flugrichtung mit dem Display in Flugrichtung ausgerichtet. Der Monitor 4 weist ungefähr die Abmaße eines herkömmlichen Computermonitors mit einer wenigstens 13 Zoll Bildschirmdiagonale auf und dient der Wiedergabe der von der Kameraüberwachungseinrichtung 5 aufgenommenen Bilder der Flugzeugkabine 11. Der auf dem gegenüber angeordneten zweiten Flugzeugsitz 8 sitzende Flugbegleiter sitzt in einem Abstand von ca. 0,8 m bis 1,5 m vor dem Monitor 4 und kann die darauf gezeigten Bilder aufgrund der Größe des Monitors 4 in einer ausreichenden Größe gut erkennen. Dies wird hier insbesondere durch die Verwendung eines entsprechend großen Monitors 4 mit einer Auflösung von wenigstens 1280 x 720 Pixeln, vorzugsweise von 1920 x 1080 Pixeln erreicht.

Die Flugzeugküchenbaugruppe 1 ist hier etwas verkleinert und durch die Kombination mit den Sanitärbaugruppen 2 und 3 zu einem Monument erweitert worden, so dass die beiden bisher vorgesehenen Einzeltoiletten rechts und links des Zentralganges 18 entfallen. Dieser gewonnene Raum in der Flugzeugkabine 11 kann hier zur Anordnung von einer oder zwei weiteren Reihen von ersten Flugzeugsitzen 6 genutzt werden, so dass die Passagierkapazität des Flugzeuges steigt. Dieser Vorteil ist insbesondere bei Flugzeugen des "single aisle"-Flugzeugtyps vorhanden, welche bevorzugt in der Kurzstrecke eingesetzt werden. Bei Kurzstreckenflügen ist es nicht von Nachteil, dass die Flugzeugküchenbaugruppe 1 in dem Monument etwas kleiner als herkömmliche Flugzeugküchenbaugruppen 1 ausgeführt ist, da die Menge der zu servierenden Speisen und Getränke bei Kurzstreckenflügen auch etwas geringer ist.

Das Monument ist hier in Form einer Wand mit einer verkleinerten Flugzeugküchenbaugruppe 1 in der linken Hälfte und zwei schmaleren Sanitärbaugruppen 2 und 3 in der rechten Hälfte verwirklicht. Neben oder statt dem an der Flugzeugküchenbaugruppe 1 vorgesehenen Monitor 4 können auch an den Sanitärbaugruppen 2 und 3 stattdessen oder zusätzlich Monitore 4 vorgesehen sein, wie in der Figur 1 zu erkennen ist. Sofern mehrere Monitore 4 vorgesehen sind, können diese zur Wiedergabe der Bilder von unterschiedlichen Kameras eingerichtet sein und damit unterschiedliche Abschnitte der Flugzeugkabine 11 in einer gegenüber der Verwendung eines einzigen Monitors 4 vergrößerten Darstellung zeigen.

Die Monitore 4 sind bevorzugt in der oberen Hälfte des Monuments an der Flugzeugküchenbaugruppe 1 oder der Sanitärbaugruppen 2 und 3 angeordnet, so dass die Flugbegleiter diese in der aufrecht sitzenden Stellung durch einen möglichst horizontalen Blick ergonomisch günstig betrachten können. Ferner kann der Monitor 4 auch fest an einem Einschub 17 der Flugzeugküchenbaugruppe 1 angeordnet sein, so dass der Einschub 17 zusammen mit dem Monitor 4 aus dem Einschubfach ein- und ausgeschoben werden kann. Dadurch behindert der Monitor 4 nicht die Benutzung des Einschubes 17. Sofern der Monitor 4 schwenkbar in eine Gebrauchsstellung bewegbar ist, ist die Schwenkbarkeit und die dadurch definierte Gebrauchsstellung so gewählt, dass der Monitor 4 in der Gebrauchsstellung eine Fläche abdeckt, in der entweder kein Einschubfach vorgesehen ist, oder in der ein Einschubfach mit einem nur sehr selten verwendeten Einschub 17 vorgesehen ist.

## Patentansprüche

1. Flugzeug mit einer Flugzeugkabine (11), einem Monument für die Flugzeugkabine (11) und einer Kameraüberwachungseinrichtung (5), wobei
- das Flugzeug erste Sitze (6) und zweite Sitze (8) aufweist, wobei die zweiten Sitze (8) Flugbegleitersitze sind, wobei
- mindestens eine Kamera der Kameraüberwachungseinrichtung (5) auf die ersten Sitze (6) gerichtet ist, wobei
- an dem Monument ein Monitor (4) zur Wiedergabe der von der Kameraüberwachungseinrichtung (5) aufgenommenen Bilder vorgesehen ist, wobei
- an dem Monument ein dem Monitor (4) gegenüber angeordneter zweiter Flugzeugsitz (8) vorgesehen ist, wobei
- das Monument eine Flugzeugküchenbaugruppe (1) aufweist, und der Monitor (4) an der Flugzeugküchenbaugruppe (1) angeordnet ist und/oder das Monument wenigstens eine Sanitärbaugruppe (2,3) aufweist, und der Monitor (4) an der Sanitärbaugruppe (2,3) angeordnet ist, wobei
- das Monument in einem hinteren Abschnitt der Flugzeugkabine (11) an einem rückwärtigen Ende der Flugzeugkabine (11) vorgesehen ist, wobei
- das Monument mit der Flugzeugküchenbaugruppe (1) in einer bei Sicht von vorne linken Hälfte der Flugzeugkabine (11) und zwei Sanitärbaugruppen (2, 3) in einer bei Sicht von vorne rechten Hälfte der Flugzeugkabine (11) verwirklicht ist, wobei
- das Flugzeug ein "single aisle"-Flugzeug mit einem Zentralgang (18) und zwei seitlich davon angeordneten Gruppen von ersten Flugzeugsitzen (6) ist, wobei
- die beiden Gruppen von ersten Flugzeugsitzen (6) an dem zu dem Monument zugewandten Ende durch zwei Trennwände (7) begrenzt werden, so dass die auf den ersten Flugzeugsitzen (6) sitzenden Passagiere abgeshern von dem Zentralgang (18) optisch und akustisch von dem Monument getrennt sind, wobei
- an einer der Trennwände (7) die mindestens eine Kamera der Kameraüberwachungseinrichtung (7) vorgesehen ist, wobei
- zwischen den Trennwänden (7) und dem Monument zwei seitlich von dem Zentralgang (18) abzweigende Ausgänge (10) mit jeweils einer Ausgangstür (9) vorgesehen sind, welche als regulärer Ausstieg oder auch als Notausstieg ausgebildet sind, wobei
- an den Trennwänden (7) zwei zweite Flugzeugsitze (8) vorgesehen sind, die klappbar sind, wobei
- der Monitor (4) in einer Gebrauchsstellung quer zu der Flugrichtung angeordnet ist.

2. Flugzeug nach Anspruch 1, wobei
- der Monitor (4) schwenkbar an dem Monument gehalten ist.

3. Flugzeug nach einem der vorangegangenen Ansprüche, wobei
- an dem Monument ein Staufach (16) zur Aufnahme des Monitors (4) vorgesehen ist.

4. Flugzeug nach einem der vorangegangenen Ansprüche, wobei
- der Monitor (4) eine oder mehrere optische Ein- und Ausgabeeinheiten und/oder ein oder mehrere akustische Ein- und Ausgabeeinheiten und/oder ein oder mehrere haptische Eingabeeinheiten aufweist.

5. Flugzeug nach einem der vorangegangenen Ansprüche, wobei
- der Monitor (4) zur Wiedergabe des Abbildes des Betrachters eingerichtet ist.

6. Flugzeug nach einem der vorangegangenen Ansprüche, wobei
- der Monitor (4) eine Auflösung von wenigstens 1280 x 720 Pixeln, vorzugsweise von 1920 x 1080 Pixeln aufweist.

7. Flugzeug nach einem der vorangegangenen Ansprüche, wobei
- der Monitor (4) eine Bildschirmdiagonale von wenigstens 13 Zoll aufweist.

8. Flugzeug nach einem der vorangehenden Ansprüche, wobei
- die Kameraüberwachungseinrichtung (5) und der Monitor (4) zusammen ein von weiteren Einrichtungen unabhängiges autarkes System bilden.

9. Flugzeug nach einem der vorangehenden Ansprüche, wobei
- das Flugzeug ein Bestellsystem aufweist, welches eine flugzeugsitzindividualisierte Bestellaufgabe vorsieht, und
- der Monitor (4) zur Wiedergabe der flugzeugsitzindividualisierten Bestellaufgabe eingerichtet ist.

10. Flugzeug nach einem der vorangehenden Ansprüche, wobei
- das Flugzeug eine flugzeugsitzindividualisierte Kommunikationseinrichtung aufweist, und
- der Monitor (4) zur Wiedergabe der von der Kommunikationseinrichtung übermittelten Signale eingerichtet ist.

## Claims

1. Aircraft comprising an aircraft cabin (11), a monument for the aircraft cabin (11), and a video surveillance device (5), wherein
- the aircraft comprises first seats (6) and second seats (8), wherein the second seats (8) are flight attendant seats, wherein
- at least one camera of the video surveillance device (5) is directed at the first seats (6), wherein
- a monitor (4) for reproducing the images recorded by the video surveillance device (5) is provided on the monument, wherein
- a second aircraft seat (8) arranged opposite the monitor (4) is provided on the monument, wherein
- the monument comprises an aircraft kitchen module (1), and the monitor (4) is arranged on the aircraft kitchen module (1) and/or the monument comprises at least one sanitary module (2, 3), and the monitor (4) is arranged on the sanitary module (2, 3), wherein
- the monument is provided in a rear portion of the aircraft cabin (11) at a rear end of the aircraft cabin (11), wherein
- the monument is realised with the aircraft kitchen module (1) in a left half of the aircraft cabin (11) when viewed from the front and two sanitary modules (2, 3) in a right half of the aircraft cabin (11) when viewed from the front, wherein
- the aircraft is a single-aisle aircraft with a central aisle (18) and two groups of first aircraft seats (6) arranged on the sides thereof, wherein
- the two groups of first aircraft seats (6) are separated at the end facing the monument by two partition walls (7), so that the passengers sitting on the first aircraft seats (6) are visually and acoustically separated from the monument, with the exception of the central aisle (18), wherein
- the at least one camera of the video surveillance device (7) is provided at one of the partition walls (7), wherein
- between the partition walls (7) and the monument, two exits (10) that branch off to the sides from the central aisle (18) with an exit door (9) each are provided, which are designed as regular exits or also as emergency exits, wherein
- two second aircraft seats (8) are provided at the partition walls (7), which are foldable, wherein
- the monitor (4) is arranged so as to be transverse to the direction of flight, in a use position.

2. Aircraft according to claim 1, wherein
- the monitor (4) is pivotably retained on the monument.

3. Aircraft according to any of the preceding claims, wherein
- a storage compartment (16) for receiving the monitor (4) is provided on the monument.

4. Aircraft according to any of the preceding claims, wherein
- the monitor (4) comprises one or more optical input and output units and/or one or more acoustic input and output units and/or one or more haptic input units.

5. Aircraft according to any of the preceding claims, wherein
- the monitor (4) is designed for reproducing the image of the viewer.

6. Aircraft according to any of the preceding claims, wherein
- the monitor (4) has a resolution of at least 1280 x 720 pixels, preferably 1920 x 1080 pixels.

7. Aircraft according to any of the preceding claims, wherein
- the monitor (4) has a screen diagonal of at least 13 inches.

8. Aircraft according to any of the preceding claims, wherein
- the video surveillance device (5) and the monitor (4) together form a stand-alone system that is independent of further devices.

9. Aircraft according to any of the preceding claims, wherein
- the aircraft comprises an order system that provides for an order process personalised to the aircraft seat, and
- the monitor (4) is designed for reproducing the order process personalised to the aircraft seat.

10. Aircraft according to any of the preceding claims, wherein
- the aircraft comprises a communications device personalised to the aircraft seat,
and
- the monitor (4) is designed for reproducing the signals transmitted by the communication device.

## Revendications

1. Avion comportant une cabine d'avion (11), un monument pour la cabine d'avion (11) et un dispositif de surveillance par caméra (5), dans lequel
- l'avion présente des premiers sièges (6) et des deuxièmes sièges (8), les deuxièmes sièges (8) étant des sièges de personnel navigant, dans lequel
- au moins une caméra du dispositif de surveillance par caméra (5) est dirigée vers les premiers sièges (6), dans lequel
- un écran (4) est prévu sur le monument pour représenter les images enregistrées par le dispositif de surveillance par caméra (5), dans lequel
- un deuxième siège d'avion (8) disposé en face de l'écran (4) est prévu sur le monument, dans lequel
- le monument présente un ensemble cuisine d'avion (1) et l'écran (4) est disposé sur l'ensemble cuisine d'avion (1) et/ou le monument présente au moins un ensemble sanitaire (2, 3) et l'écran (4) est disposé sur l'ensemble sanitaire (2, 3), dans lequel
- le monument est prévu dans une partie arrière de la cabine d'avion (11), à une extrémité arrière de la cabine d'avion (11), dans lequel
- le monument est réalisé avec l'ensemble cuisine d'avion (1) dans une moitié gauche de la cabine d'avion (11) vue de face et deux ensembles sanitaires (2, 3) dans la moitié droite de la cabine d'avion (11) vue de face, dans lequel
- l'avion est un avion « monocouloir » avec une allée centrale (18) et deux groupes de premiers sièges d'avion (6) disposés latéralement par rapport à celle-ci, dans lequel
- les deux groupes de premiers sièges d'avion (6) sont délimités à l'extrémité tournée vers le monument par deux cloisons (7), de sorte que les passagers assis sur les premiers sièges d'avion (6) sont séparés visuellement et acoustiquement du monument, à l'exception de l'allée centrale (18), dans lequel
- ladite au moins une caméra du dispositif de surveillance par caméra (7) est prévue sur l'une des cloisons (7), dans lequel
- deux sorties (10) bifurquant latéralement de l'allée centrale (18) sont prévues entre les cloisons (7) et le monument, chacune avec une porte de sortie (9) qui sont conçues comme une sortie normale ou comme une sortie de secours, dans lequel
- deux deuxièmes sièges d'avion (8), qui sont rabattables, sont prévus sur les cloisons (7), dans lequel
- l'écran (4) en position d'utilisation est disposé transversalement à la direction de vol.

2. Avion selon la revendication 1, dans lequel
- l'écran (4) est maintenu de manière pivotante sur le monument.

3. Avion selon l'une des revendications précédentes, dans lequel
- un compartiment de rangement (16) est prévu sur le monument pour recevoir l'écran (4).

4. Avion selon l'une des revendications précédentes, dans lequel
- l'écran (4) présente une ou plusieurs unités d'entrée et de sortie optiques et/ou une ou plusieurs unités d'entrée et de sortie acoustiques et/ou une ou plusieurs unités d'entrée haptiques.

5. Avion selon l'une des revendications précédentes, dans lequel
- l'écran (4) est conçu pour représenter l'image de l'observateur.

6. Avion selon l'une des revendications précédentes, dans lequel
- l'écran (4) présente une résolution d'au moins 1280 x 720 pixels, de préférence de 1920 x 1080 pixels.

7. Avion selon l'une des revendications précédentes, dans lequel
- l'écran (4) présente une diagonale d'écran d'au moins 13 pouces.

8. Avion selon l'une des revendications précédentes, dans lequel
- le dispositif de surveillance par caméra (5) et l'écran (4) forment ensemble un système autonome indépendant d'autres dispositifs.

9. Avion selon l'une des revendications précédentes, dans lequel
- l'avion présente un système de commande qui permet une tâche de commande individualisée par siège d'avion, et
- l'écran (4) est conçu pour représenter la tâche de commande individualisée par siège d'avion.

10. Avion selon l'une des revendications précédentes, dans lequel
- l'avion présente un système de communication individualisé par siège d'avion, et
- l'écran (4) est conçu pour représenter les signaux transmis par le dispositif de communication.
